# EUROPEAN PATENT SPECIFICATION

(11) **EP 4 555 124 B1**
(45) Date of publication and mention of the grant of the patent: **28.01.2026**
(21) Application number: 23739274.1
(22) Date of filing: 07.07.2023
(51) Int. Cl.: C25B 1/04, C25B 3/26, C25B 15/08, C25B 1/042, B01D 53/04, C25B 15/021

(54) **SOE PLANT AND PROCESS FOR PERFORMING SOLID OXIDE ELECTROLYSIS**
SOE-ANLAGE UND VERFAHREN ZUR DURCHFÜHRUNG EINER FESTOXIDELEKTROLYSE
INSTALLATION D'ÉLECTROLYSE D'OXYDE SOLIDE (SOE) ET PROCÉDÉ POUR EFFECTUER UNE ÉLECTROLYSE D'OXYDE SOLIDE

(30) Priority: 12.07.2022 EP 22184417
(43) Date of publication of application: 21.05.2025
(73) Proprietor: Topsoe A/S, 2800 Kgs. Lyngby (DK)
(72) Inventor: STUMMANN, Troels Dahlgaard, 2300 Copenhagen (DK); HOLSTEBROE, Majken, 2830 Virum (DK); SPETH, Christian Henrik, 3540 Lynge (DK); HANSEN, John Bøgild, 3050 Humlebæk (DK)
(74) Representative: Topsoe A/S
(86) International application number: PCT/EP2023/068916
(87) International publication number: WO 2024/013029

(56) References cited:
- EP-A1- 1 912 033
- US-A- 4 636 225
- US-A1- 2021 079 535
- US-B2- 7 520 916

## Description

### Field

The present invention regards a process for operating a high-temperature solid oxide electrolysis system suitable for converting a fuel stream into a product stream as well as a system for carrying out the process.

### Background

The climate change has accelerated a worldwide transition from fossil fuels to renewable energy sources. Typically, the renewable energy comes from wind and solar power generation. The challenge with renewable energy is its intermittent nature.

Power-to-X (PtX) is a term used for electricity conversion, energy storage, and reconversion pathways that use electric power. Power-to-X conversion technologies allow for the decoupling of power from the electricity sector for use in other sectors (such as transport or chemicals) and have the ability to eliminate problems with fluctuating renewable energy generation.

At present, electrolysis is the core technology of PtX solutions, where X typically is hydrogen, syngas, chemicals or synthetic fuels. When electrolysis is combined with renewable electricity, the production of fuels and chemicals can be decoupled from fossil resources.

Solid oxide electrolysis (SOE) technology is particularly attractive for this because of higher conversion efficiencies than low-temperature electrolysis-a result of favorable thermodynamics and kinetics at higher operating temperatures.

SOECs can be used for direct electrochemical conversion of steam (H₂O), carbon dioxide (CO₂), or both into hydrogen (H₂), carbon monoxide (CO), or syngas (H₂+CO), respectively.

SOECs can be thermally integrated with a range of chemical syntheses, enabling recycling of captured CO₂ and H₂O into synthetic natural gas, gasoline, methanol, or ammonia, resulting in further efficiency improvements compared with low-temperature electrolysis technologies.

The splitting of H₂O or CO₂ occurs at solid oxide electrolysis cell (SOEC) electrodes. Multiple cells are combined into SOEC stacks, and multiple stacks are in turn combined into an SOEC plant.

The fuel stream (H₂O and/or CO₂) enters the process side of the SOEC where it is (partly) converted into the product (H₂, CO or syngas). The oxygen produced in the conversion on the fuel side is transferred through the electrochemical cell to the oxy side of the SOEC, where it is recombined as gaseous oxygen. It is typically transported away from the SOEC with a flush fluid.

A solid oxide cell (SOC) is an electrochemical conversion device having two compartments (an anode side and a cathode side) divided by an electrolyte material made of a solid oxide or a ceramic electrolyte. It may be used as a solid oxide electrolysis cell (SOEC) or as a solid oxide fuel cell (SOFC). Such a cell is fully reversible e.g. for the components H₂O<->H₂ and CO2<->CO and for mixtures thereof.

When operated in SOEC mode, the goal is to produce H₂, CO or mixtures of H₂ and CO (also referred to as synthesis gas) - and the quality of the converted gas, also called the product gas (or product fluid) may be critical for downstream applications. It is thus desirable to minimize the presence of undesired components (e.g. air) in the product fluid to obtain a high purity product fluid.

An SOEC plant generally comprises multiple stacks connected in parallel and/or series in an amount to meet the required production needs. In SOEC mode, the cathode side may also be referred to as the fuel side and the anode side may also be referred to as the oxy side or the flush side.

There is a lot of focus on optimizing the performance of the SOEC technology by increasing the efficiency of the electrolysis stacks. However, optimization of the process equipment supporting the SOEC stacks is equally important. Optimizing the design of an SOEC-based plant is a balance between complexity of the process, energy consumption per unit of product gas and the costs of producing the equipment.

Various optimizations for operating an SOEC plant have previously been suggested.

US 2021/079535 discloses a high-temperature SOEC-process using a flush for its oxy-side.

For instance, as the SOEC process operates at high temperature levels, the cold feeds (process and flush) must be heated to the desired SOEC temperature. The primary heating may take place by heat exchange with the hot SOEC fluids (the fluids leaving the SOEC). Such heat exchangers may be referred to as feed/effluent heat exchangers. Balance heat may be added using for instance one or more electric heaters. However, there is still a need for optimizing the performance of SOEC plants to improve the industrial applicability and the rentability of such both for producing hydrogen, carbon monoxide and synthesis gas.

### SUMMARY OF INVENTION

The inventors have found that moisture or humidity in flush gas air for the solid oxide electrolysis cell has a negative effect on the lifetime of the cell. It has been found that using dry flush gas improves performance and extends the lifetime of the SOEC stacks

Systems and processes have been suggested for removing moisture from various gas streams. In WO 2016/091636, for example, ultra-high purity carbon monoxide is prepared by high-temperature electrolysis of pre-treated food grade carbon dioxide in a solid oxide electrolysis cell stack. The heated carbon dioxide feed mixture is passed through a drying unit to remove moisture and is then fed to the fuel side of the solid oxide electrolysis cell stack. The drying unit employs a combination of temperature swing adsorption and pressure swing adsorption. In EP 2 364 766 discloses a method for the removal of moist from a methanation product stream, which process is based on adsorption of moisture. In WO 2011/017782 a compressed gas dryer is disclosed, which is provided with a drying zone and a regeneration zone, and a drum rotatable in the housing containing a drying agent that is transferred successively through the drying zone and the regeneration zone, whereby said regeneration zone comprises a first subzone having a first inlet to supply a first regeneration gas flow, and a second subzone having a second inlet to supply a second regeneration gas flow of which the relative humidity is lower compared to that of the first regeneration gas flow; and that an outlet of said drying zone is connected via a connection conduit to the second inlet of the second subzone.

The inventors have now found a novel process for operating a high-temperature solid oxide electrolysis system suitable for converting a fuel gas into a product gas and a system suitable for carrying out the invention.

Accordingly a process is provided for operating a high-temperature solid oxide electrolysis system comprising the steps of:
- providing a solid oxide electrolysis cell unit comprising at least one solid oxide electrolysis cell having a fuel side and an oxy side;
- providing a moist flush gas stream;
- providing an adsorbent having a moisture adsorption temperature range for adsorbing moisture and a moisture desorption temperature range for desorbing moisture;
- adjusting the temperature of the moist flush gas stream to a temperature within the moisture adsorption temperature range to produce a temperature adjusted moist flush gas stream;
- operating at least a section of the adsorbent in an adsorption mode by passing the temperature adjusted moist flush gas stream through at least the section of the adsorbent to provide a dried flush gas stream;
- passing the dried flush gas stream through the oxy side of the SOEC to produce a spent flush gas stream; and then
- adjusting the temperature of at least part of the spent flush gas stream to a temperature within the moisture desorption temperature range to produce a temperature adjusted, spent flush gas stream;
- operating at least a section of the adsorbent in a desorption mode by passing at least a part of the temperature adjusted, spent flush gas stream through at least the section of the adsorbent to desorb moisture bound in the adsorbent to obtain a regenerated adsorbent and a spent regeneration gas.

In addition a system for carrying out the process of the invention is provided which is suitable for converting a fuel stream into a product stream, the system comprising:
∘ a solid oxide electrolysis cell unit (8) comprising at least one solid oxide electrolysis cell comprising:
   ∘ a fuel side (9)
   ∘ an oxy side (10)
   ∘ a flush gas inlet (11)
   ∘ a flush gas outlet (12)
   ∘ a fuel gas inlet (13)
   ∘ a product gas outlet (14 ), and
∘ a drying unit (1) comprising
   ∘ an adsorbent bed (2)
   ∘ a drying unit inlet (3)
   ∘ a drying unit outlet (4)
   ∘ a regeneration gas inlet (5)
   ∘ a regeneration gas outlet (6)

wherein the adsorbent bed (2) is arranged within the drying unit (1); and wherein the drying unit (1) is arranged to convey a moist flush gas stream from the dry-ing unit inlet (3) through the adsorbent bed (2) to the drying unit outlet (4) and wherein the drying unit (1) is arranged to convey a spent flush gas stream from the regeneration gas inlet (5) through the adsorbent bed (2) to the regeneration gas outlet (6); and wherein the drying unit outlet (4) is in fluid communication with the flush gas inlet (11) of the solid oxide electrolysis cell unit (8); and
wherein the solid oxide electrolysis cell unit (8) is arranged to convey dried flush gas from the flush gas inlet (11), through the oxy side of the at least one solid oxide electrolysis cell, and to the flush gas outlet (12) of the solid oxide electrolysis cell unit (8); and
wherein the flush gas outlet (12) is in fluid communication with the regeneration gas inlet (5) of the drying unit (1)

The process and the system according to the invention have several advantages all contributing to the industrial applicability of the process and the system. The process may be conducted at a pressure close to ambient pressure in the drying unit both during adsorption and during desorption. This is advantageous, since it is preferred to provide the flush gas to the solid oxide electrolysis unit at a pressure close to ambient pressure to save compression energy. Also, it allows a low pressure drop which saves energy. In addition, the claimed process reduces the flush gas consumption by reusing a waste gas from the SOEC process as regeneration gas. Further, the claimed process provides an efficient heat integration, since a good part of the energy used for regeneration is recovered. Accordingly, significant savings can be achieved by the process and the system according to the invention by reducing energy loss.

It is to be understood that a flush gas stream for flushing an oxy side of a solid oxide electrolysis cell should be inert with respect to the reaction taking place. Suitable flush gases are for instance air, nitrogen, carbon dioxide or oxygen; or mixtures thereof. The inlets and the outlets may be equipped with valves if it is desired to control the flows passing such inlets and/or outlets. In the present context the moisture removed may be both vaporous and liquid water. Generally, the moist flush gas stream will be provided as air. The air may be compressed to create a driving force for the flow of the streams within the flush system. When the temperature of a gas stream is adjusted, this may include compressing, expanding, heating and cooling the gas stream in any order to obtain the desired temperature. In particular the regeneration of the adsorbent is preferably conducted by gradually ramping up the temperature of the regeneration gas stream when starting regeneration and ramping down the temperature of the regeneration gas when cooling down to control the temperature profile within the adsorbent. The adsorbent may be operated in adsorption mode for any period of time. However the efficiency will decrease as the adsorbent gets saturated and it is preferred to change to another adsorbent which contains less adsorbed water. Similarly, the adsorbent may be operated in regeneration mode for any period of time. However the need for regeneration will decrease as the adsorbent releases adsorbed water and it is preferred then to allow for the thus regenerated adsorbent to cool down. Possibly by passing a cooling gas through the adsorbent.

Before drying of the moist flush gas stream in the drying unit, a part of the moisture may be removed by cooling the stream and removing condensed water from the stream. This improves the energy efficiency. The moist flush gas stream may be cooled e.g. by heat exchange between the colder dried flush gas stream and the warmer moist flush gas stream. The dried flush gas stream may be heated prior to passing it through the oxy side of the at least one solid oxide electrolysis cell, e.g. by heat exchange.

In an embodiment, the temperature adjusted, spent flush gas stream is passed through the adsorbent in a counter current flow relative to the temperature adjusted, moist flush gas stream.

### The adsorbent

When referring to "at least a section of the adsorbent" this is meant to refer to a part of the adsorbent used for drying the moist flush gas and which must subsequently be regenerated. In the present context, the "at least a section of the adsorbent" means that the process may in an embodiment be conducted in a sequential mode where the entire surface of the adsorbent is first operated in adsorption mode and then subsequently the entire surface of the adsorbent is operated in desorption mode. After desorption, the adsorbent may again be operated in adsorption mode, or optionally, the entire surface of the adsorbent may be operated in cooling mode after the desorption and before again operating the adsorbent in adsorption mode. Alternatively, the adsorbent may be arranged in sections and each section is operated in either adsorption mode, desorption mode or cooling mode. An additional operation mode of stand-by may also be used, where a stream of dry gas may still be passed through the bed. In an embodiment, the process of the invention comprises a subsequent step of operating at least a section of the adsorbent in a cooling mode, the step comprising cooling at least the section of the adsorbent from a temperature within the moisture desorption temperature range to a temperature within the moisture adsorption temperature range.

The cooling may be obtained by passing at least part of the spent flush gas stream through at least a section of the adsorbent and gradually ramping down the tempera-ture of the spent flush gas stream from a temperature within the moisture desorption temperature range to a temperature within the moisture adsorption temperature range to obtain a regenerated, cooled adsorbent. The cooling may alternatively or also be obtained by passing at least a part of the dried flush gas stream through at least a section of the adsorbent and gradually ramping down the temperature of the at least part of the spent flush gas stream from a temperature within the moisture desorption temperature range to a temperature within the moisture adsorption temperature range to obtain a regenerated, cooled adsorbent.

Any adsorbent suitable for drying air may be employed. Examplary adsorbents are silica gel, activated alumina, zeolites and mixtures thereof. Each specific adsorbent has a moisture adsorption temperature range for adsorbing moisture and a moisture desorption temperature range for desorbing moisture. The ranges may vary from adsorbent to adsorbent. For example some silica gels need to be heated up to approx. 175 °C and some zeolites need to be heated to 250 °C to ensure proper desorption. In an embodiment, the adsorbent is selected from the group consisting of silica gel, activated alumina, and zeolites; or mixtures thereof.

As described an adsorbent may be operated first in an adsorption mode (i.e. drying mode) at an adsorption temperature in the moisture adsorption temperature range and then in a desorption mode (i.e. regeneration mode) at a desorption temperature in the moisture desorption temperature range. Aditionally the adsorbent may subsequently be operated in a cooling mode before it is again operated in adsorption mode. It is preferred that the desorption is executed by gradually increasing (or ramping up) the temperature of the regeneration stream until the desired desorption temperature is reached and the temperature is maintained until a desired degree of drying has been achieved. In an embodiment according to the invention the adsorbent is subsequently operated in a cooling mode comprising cooling the adsorbent from a temperature within the moisture desorption temperature range to a temperature within the moisture adsorption temperature range. It is preferred that the cooling is executed by gradually lowering (or ramping down) the temperature of the cooling stream. According to an embodiment the cooling stream is obtained from the spent flush gas. According to another embodiment the cooling stream is obtained from the dried flush gas.

The adsorbent may in addition be operated in stand-by mode, where the adsorbent is neither used to dry a stream nor is it being regenerated or cooled down. When in standby mode a stream of dry gas may still be passed through the bed, preferably at a temperature within the adsorption range.

The adsorbent may be divided into several sections which may be operated independently of each other. Each section may for example be arranged within a rotating drying drum where a section of the drum is in adsorption mode, another section is in desorption mode and yet another is in cooling mode and as the drum rotates each section moves. In such case moist flush gas is continuously fed to one inlet and spent flush gas is continuously fed to another inlet while a section of the adsorbent gradually moves from one inlet to the next. In addition a third inlet may provide a cooling gas to the section of the adsorbent after the regeneration. Alternatively each section of the adsorbent may be arranged in separate beds. According to an embodiment of the present invention, the adsorbent is arranged in multiple beds and each bed is intermittently operated in adsorption mode, in regeneration mode, in cooling mode and in a standby mode such that at least one bed is always in adsorption mode. In an embodiment, the adsorbent comprises two or more sections and each section is operated independently of the other sections. Accordingly the adsorbent may e.g. be divided into two, three or four sections. Each section may be intermittently operated in adsorption mode, in regeneration mode, in cooling mode and in standby mode. For example, each section may be first operated in adsorption mode, then in regeneration mode, then in cooling mode and finally in standby mode.

The moist flush gas stream may be provided as a pressurized stream and the spent flush gas stream may be pressurized prior to adjusting the temperature to a temperaturethe moisture desorption temperature range

The use of heat exchangers for cooling and heating the gas streams further improves the energy efficiency of the process and system. In particular, the moist flush gas stream may conveniently be cooled by heat exchange between the colder dried flush gas stream and the warmer moist flush gas stream; and the regeneration gas stream may conveniently be heated by the warmer spent regeneration gas stream by heat exchange. Heat exchange between other streams may also be envisaged.

### The system

The system may comprise features known in the art.

Accordingly, the system may further comprise a control module for controlling the flow of tempera-ture adjusted, moist flush gas stream to the drying unit, the dried flush gas stream from the drying unit, the temperature adjusted, dried flush gas stream from the drying unit, the temperature adjusted, spent flush gas stream to the dry-ing unit and the spent regeneration gas from the drying unit.

The drying unit outlet (4) of the system may in addition to being in fluid communication with the flush gas inlet (11) of the solid oxide electrolysis cell unit (8), also be in direct fluid communication with the regeneration gas inlet (5) of the drying unit (1).

The solid oxide electrolysis cell unit (8) is in general arranged to convey a fuel gas from the fuel gas inlet (13), through the fuel side of the at least one solid oxide electrolysis cell, and to a product gas outlet (14) of the solid oxide electrolysis cell unit (8).

The system may comprise a flush gas vent (16) arranged downstream of the flush gas outlet (12) of the solid oxide electrolysis cell unit (8) and upstream of the regeneration gas inlet (5) of the drying unit (1). Further, a compressor (21) may be arranged downstream of the flush gas outlet (12) of the solid oxide electrolysis cell unit (8) and upstream of the regeneration gas inlet (5) of the drying unit (1).

A temperature adjustment element in the form of a cooler and/or a heater may be arranged downstream of the flush gas outlet of the solid oxide electrolysis cell unit and upstream of the regeneration gas inlet of the drying unit and/or arranged upstream of the drying unit inlet. In addition, a cooler may be arranged upstream of the drying unit inlet and/or a water separator may be arranged downstream of the cooler and upstream of the drying unit inlet. The coolers and/or heaters may be heat exchangers. One heat exchanger may be arranged to exchange heat between the moist flush gas stream and the dried flush gas stream. Another heat exchanger may be arranged to exchange heat between the spent regeneration gas stream and the spent flush gas stream.

The drying unit of the system preferably comprises multiple adsorbent beds arranged within the drying unit and the multiple adsorbent beds are preferably arranged to convey a gas stream from the drying unit inlet through any of the multiple adsorbent beds to the drying unit outlet and to convey a gas stream from the regeneration gas inlet through the adsorbent bed to the regeneration gas outlet. In such embodiments the system a control module is generally present for controlling operation of each of the multiple beds in adsorption mode, regeneration mode, cooling mode and standby mode.

The operation of solid oxide electrolysis cell units are known in general. In general, a fuel gas stream is fed to the fuel gas inlet and passed through the fuel side of the at least one solid oxide electrolysis cell while an electrical field is exerted on the at least one solid oxide electrolysis cell converting the fuel gas stream to a product gas stream exiting the fuel gas outlet. The fuel gas stream may e.g. be selected from any one of water, hydrogen, carbon monoxide, carbon dioxide and mixtures thereof. The flush gas stream serves to flush oxygen generated at the oxy side away from the cell.

The operation and optimization of gas dryer units are known to the skilled person in general.

According to an aspect of the invention, a process is provided, wherein the adsorbent comprises at least a first, a second and a third section, and wherein the temperature adjusted moist flush gas stream is first passed through the first section of the adsorbent operating in adsorption mode to provide a dried flush gas stream; then passing the dried flush gas stream through the second section of the adsorbent operating in cooling mode, and then passing the dried flush gas stream through the oxy side of the SOEC to produce a spent flush gas stream; and then passing the spent flush gas stream through the third section of the adsorbent operating in desorption mode to produce a spent regeneration gas, wherein the flush gas continuously passes through all three vessels. This setup has an advantage that it is possible to operate the process with a low pressure drop. A driving force on the flush gas may be excerted by an air fan placed e.g. between first and second section of the adsorbent. In addition, a (balancing) air fan may be placed between the flush gas outlet and the third section of the adsorbent to adjust the driving force as needed. A manifold system may be included, which may be guided by automated valves or it may be guided by a rotating valve to enable automatic switch-over between the first, second and third section as required. This way the flush gas passes through all three sections of the adsorbent all the time, only the flow is varied between the three sections of the adsorbent. The adsorbent may e.g. be arranged as radial flow beds or parallel beds. Since heating up requires a substantial amount of energy, overall efficiency could be improved by also utilizing the heat originating from the process side of the solid oxide electrolysis cell unit.

The invention has been described for use in SOEC systems. However, it is to be understood, that the drying unit according to the invention may also be used in an SOFC system. In SOFC mode following combustion reactions takes place:

2 CO + O₂ => 2 CO₂

and/or

2 H₂ + O₂ = > 2 H₂O

Thus, the flush gas does not only serve to flush, it is actually a reactant gas. But the same drying may be conducted of the feed and air is a suitable flush gas, optionally oxygen enriched gas may be used or another oxygen generating gas.

In addition, the flush gas may be used for cooling the SOFC since in the SOFC mode reactions are exothermic.

### BRIEF DESCRIPTION OF THE DRAWINGS

Fig. 1 shows an embodiment of the system according to the invention.
Fig. 2 shows a multiple vessel (2a and 2b) embodiment of a drying unit according to the invention.
Fig. 3 shows a multiple vessel (2a, 2b and 2c) embodiment of a drying unit according to the invention.
Fig. 4 shows an embodiment of the system according to the present invention.
Fig. 5 shows a layout for drying of a product gas from a solid oxide electrolysis cell unit.

### POSITION NUMBERS

1. Drying unit
2. Adsorbent bed
3. Drying unit inlet
4. Drying unit outlet
5. Regeneration gas inlet
6. Regeneration gas outlet
8. Solid oxide electrolysis cell unit comprising at least one solid oxide electrolysis cell (SOEC unit)
9. Fuel side
10. Oxy side
11. Flush gas inlet
12. Flush gas outlet
13. Fuel gas inlet
14. Product gas outlet
15. Control module
16. Flush gas vent
21. Compressor or Blower/air fan
22. Valve

### DETAILED DESCRIPTION

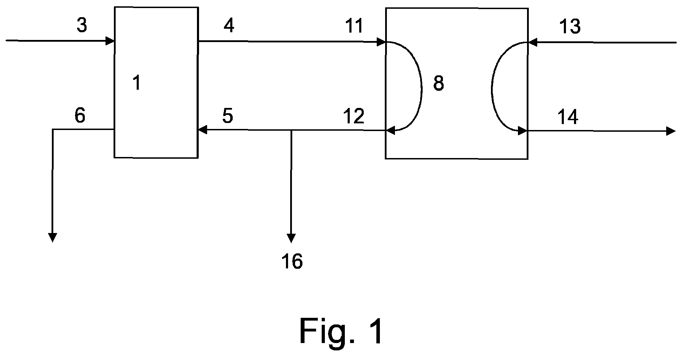

In figure 1, moisture is removed from compressed flush gas entering through drying unit inlet (3) into a dryer unit (1), producing dried flush gas exiting through drying unit outlet (4) which gas is passed through flush gas inlet (11) to the oxy side (10) of the solid oxide electrolysis cell unit (8) for flushing oxygen. A part of the flush gas exiting through flush gas outlet (12) is used as regeneration gas entering drying unit (1) through regeneration gas inlet (5) for the regeneration of the dryer unit. The gas desorbs moisture from the dryer and exits the drying unit (1) as spent regeneration gas through regeneration gas outlet (6). The remaining part of the spent flush gas may be used in other unit operations (16), for example for drying the product gas. Equipment for temperature and pressure adjustment may be provided but it is not shown. Fuel gas enters the solid oxide electrolysis cell unit (8) through fuel gas inlet (13) where it is converted on the fuel side (9) , and a product gas exits the unit (8) through product gas outlet (14).

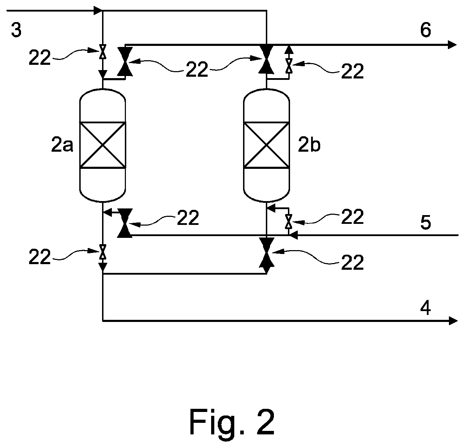

In figure 2, two dryer vessels comprising adsorbent beds (2a and 2b) are shown with valves (22) for controlling the gas flows to and from the beds. Vessel 2a in adsorption mode and vessel 2b in regeneration mode (white valves represent open valves, black valves represent closed valves): Valves (22) on the dryer inlet (3) directs the dryer inlet flow to vessel 2a and valves on the dryer outlet (4) directs the dried gas from vessel 2a to the dryer outlet (4).

Valves (22) on the regeneration gas inlet (5) direct the regeneration gas flow to vessel 2b and valves (22) on the regeneration gas outlet (6) direct the spent regeneration gas from vessel 2b to the regeneration gas outlet (6).

The flow direction in this example is from top of vessel to bottom of vessel during adsorber mode, and from bottom of vessel to top of vessel in regeneration mode. This reduces the risk that the bed material should become fluidized, because the gravity will help.

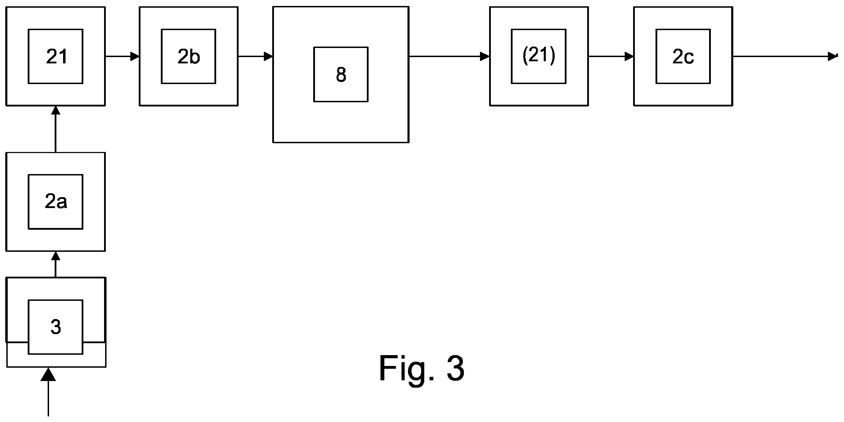

Figure 3 is a simplified flow diagram of an embodiment according to the invention showing the flow of the flush gas in a drying unit (1) coupled with a solid oxide electrolysis cell unit (8) where the adsorbent bed (2) of the drying unit (1) is divided into three beds (2a, 2b and 2c). The drying principle in this embodiment is comparable to the operation principle of temperature swing adsorption, though the purpose is different.

In the embodiment, a temperature adjusted, moist flush gas stream is passed through the drying unit inlet (3) and through the adsorbent bed (2a) operating in drying mode. The resulting dried flush gas stream is passed through regenerated adsorbent bed (2b) to cool down the regenerated adsorbent bed (2b) while heating up the dried flush gas stream. In the beginning of the cooling of the bed (2b), the adsorbent bed (2b) has a temperature around 200 °C and it is cooled down to a temperature near ambient temperature. From adsorbent bed (2b) the thus heated, dried flush gas stream is passed through the drying unit outlet and into the flush gas inlet (11) to the oxy side (10) of the solid oxide electrolysis cell unit (8). Oxygen formed within the cell unit (8) is taken up by the flush gas to produce spent flush gas exiting the flush gas outlet (12). The temperature of the spent flush gas is adjusted to a desorption temperature around 150 to 250 °C and passed through the regeneration gas inlet (5) and through the adsorbent bed (2c) for regeneration of the adsorbent bed (2c). The regeneration results in a drying and heating of the adsorbent bed (2c) while the gas passing through the adsorbent bed (2c) is cooled down to produce at the regeneration gas outlet (6) a spent regeneration gas.

An air fan (21) is placed e.g. between adsorbent bed (2a) and adsorbent bed (2b) and exerts a driving force on the stream throughout the flush side of the system - from the drying unit inlet (3) to the regeneration gas outlet (6). In addition, a (balancing) air fan (21) may be placed between the solid oxide electrolysis cell unit and the adsorbent bed (2c) to adjust the driving force as needed.

A manifold system (not shown) may be included, which may be guided by automated valves or it may be guided by a rotating valve to enable automatic switch-over between the individual vessels from A to B and on to C as required.

In this embodiment flush gas passes through all three vessels all the time, only the flow is varied. An advantage of such an embodiment is that it is possible to operate the system with a low pressure drop. The adsorbent may e.g. be arranged as radial flow beds or parallel beds.

Since heating up requires a substantial amount of energy, overall efficiency could be improved by also utilizing the heat originating from the process side of the solid oxide electrolysis cell unit.

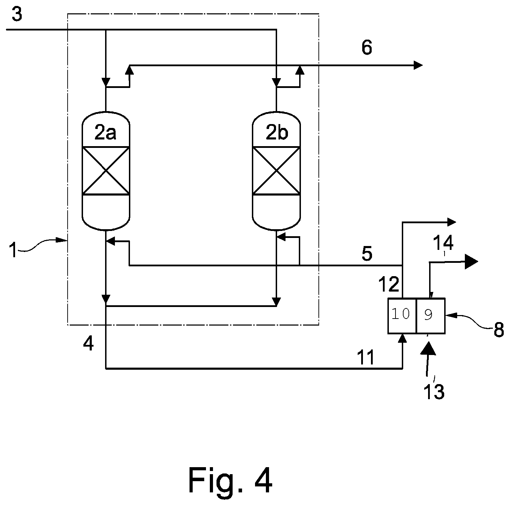

In figure 4, moist flush gas is cooled in a heat exchanger (not shown) and is further cooled to the adsorption temperature in a cooler (not shown) with subsequent removal of condensate in a separator (not shown). The moist flush gas then enters through drying unit inlet (3) and passes through drying bed 2a where most of the remaining moisture is removed, producing dried flush gas which exits the drying unit through drying unit outlet (4). The dried flush gas is heated in a heat exchanger (not shown) and used as flush gas entering flush gas inlet (11) to pass through the oxy side (10) of the solid oxide electrolysis cell unit (8). Oxygen formed within the cell unit (8) is taken up by the flush gas to produce spent flush gas exiting the flush gas outlet (12). The spent flush gas is pressurized in a blower (not shown), and the temperature is adjusted in a heat exchanger (not shown), an electric heater (not shown) and in a cooler (not shown) and enters the drying unit (1) through regeneration gas inlet (5) in the bottom. The regeneration gas passes through the adsorbent bed 2b for desorption of moisture. The spent regeneration gas exiting regeneration gas outlet (6) of the dryer from the top is used to adjust the temperature of the spent flush gas in a heat exchanger (not shown). The moisture desorbs from the adsorbent bed and leaves the system with the spent regeneration gas.

On the fuel side (9) of the solid oxide electrolysis cell unit (8), steam may be converted to a product gas comprising hydrogen, carbon dioxide may be converted to a product gas comprising carbon monoxide or a combination of steam and carbon dioxide may be converted to a product gas comprising hydrogen and carbon monoxide. Drying of the product gas may also be conducted. This is best achieved on compressed product gas, but it can also be dried at ambient pressure. Often, drying is only required intermittently.

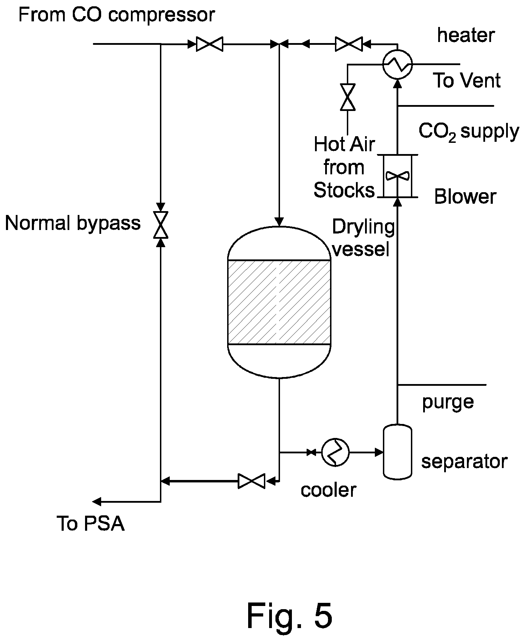

In figure 5, a layout is shown for drying of a product gas from a solid oxide electrolysis cell unit. A moist cooled product stream (marked as "from the compressor") is routed to the top of the drying unit and passed through an adsorbent bed. The dried product stream leaving the bottom of the vessel is routed to the downstream process. In normal, continuous operation there is no moisture in the product stream, in which case the entire product stream may be routed through a bypass of the drying unit.

For regeneration of the adsorbent bed, the drying unit is isolated from the process (e.g. when the product stream does not contain water). It is filled with a dry inert gas and a circuit is established from the blower to the heater, in which the gas is heated to 150 - 200 °C (e.g. by temperature adjusted, spent flush gas from the solid oxide electrolysis stack unit). The hot gas flows through the absorbent bed, removing the moisture. The gas containing the moisture leaves the absorbent bed and is routed to a cooler in which the moisture is condensed. The liquid water is separated in a traditional water separator and the dried gas is routed to the blower, thus completing the circuit.

## Claims

1. A process for operating a high-temperature solid oxide electrolysis system comprising the steps of:
- providing a solid oxide electrolysis cell unit comprising at least one solid oxide electrolysis cell having a fuel side and an oxy side;
- providing a moist flush gas stream;
- providing an adsorbent having a moisture adsorption temperature range for adsorbing moisture and a moisture desorption temperature range for desorbing moisture;
- adjusting the temperature of the moist flush gas stream to a temperature within the moisture adsorption temperature range to produce a temperature adjusted moist flush gas stream;
- operating at least a section of the adsorbent in an adsorption mode by passing the temperature adjusted moist flush gas stream through at least the section of the adsorbent to provide a dried flush gas stream;
- passing the dried flush gas stream through the oxy side of the SOEC to produce a spent flush gas stream; and then
- adjusting the temperature of at least part of the spent flush gas stream to a temperature within the moisture desorption temperature range to produce a temperature adjusted, spent flush gas stream;
- operating at least a section of the adsorbent in a desorption mode by passing at least a part of the temperature adjusted, spent flush gas stream through at least the section of the adsorbent to desorb moisture bound in the adsorbent to obtain a regenerated adsorbent and a spent regeneration gas.

2. The process according to claim 1, wherein the spent flush gas stream is pressurized prior to adjusting the temperature to a temperature in the moisture desorption temperature range.

3. The process according to any one of claims 1 or 2, wherein the moist flush gas stream is provided as a pressurized stream.

4. The process according to any one of claims 1 to 3, wherein prior to passing the moist flush gas stream through the at least a section of the adsorbent, a part of the moisture is removed by cooling the moist flush gas stream and removing condensed water from the stream.

5. The process according to any one of the preceding claims, wherein the moist flush gas stream is cooled by heat exchange between the colder dried flush gas stream and the warmer moist flush gas stream.

6. The process according to any one of the preceding claims, wherein the dried flush gas stream is heated prior to passing it through the oxy side of the at least one solid oxide electrolysis cell.

7. The process according to any one of the preceding claims, wherein a fuel gas stream selected from any one of water, hydrogen, carbon monoxide, carbon dioxide and mixtures thereof, is passed through the fuel side of the at least one solid oxide electrolysis cell while an electrical field is excerted on the at least one solid oxide electrolysis cell.

8. The process according to any one of the preceding claims, wherein the process comprises a subsequent step of operating at least a section of the adsorbent in a cooling mode, the step comprising cooling at least the section of the adsorbent from a temperature within the moisture desorption temperature range to a temperature within the moisture adsorption temperature range.

9. The process according to claim 8, wherein the cooling is obtained by passing at least part of the spent flush gas stream through at least a section of the adsorbent and gradually ramping down the temperature of the spent flush gas stream from a temperature within the moisture desorption temperature range to a temperature within the moisture adsorption temperature range to obtain a regenerated, cooled adsorbent.

10. The process according to claim 8, wherein the cooling is obtained by passing at least a part of the dried flush gas stream through at least a section of the adsorbent before passing the dried flush gas stream through the oxy side of the SOEC, and gradually ramping down the temperature of the at least part of the spent flush gas stream from a temperature within the moisture desorption temperature range to a temperature within the moisture adsorption temperature range, to obtain a regenerated, cooled adsorbent.

11. The process according to claim 1, wherein the adsorbent comprises at least a first, a second and a third section, and wherein the temperature adjusted moist flush gas stream is first passed through the first section of the adsorbent operating in adsorption mode to provide a dried flush gas stream; then passing the dried flush gas stream through the second section of the adsorbent operating in cooling mode, and then passing the dried flush gas stream through the oxy side of the SOEC to produce a spent flush gas stream; and then passing the spent flush gas stream through the third section of the adsorbent operating in desorption mode to produce a spent regeneration gas, wherein the flush gas continuously passes through all three vessels.

12. The process according to any one of the preceding claims, wherein the adsorbent is selected from the group consisting of silica gel, activated alumina, and zeolites; or mixtures thereof.

13. The process according to any one of the preceding claims, wherein the adsorbent comprises two or more sections and each section is operated independently of the other sections.

14. The process according to claim 13, wherein each section is intermittently operated in adsorption mode, in regeneration mode, in cooling mode and in standby mode.

15. The process according to any one of claims 13 or 14, wherein each section is first operated in adsorption mode, then in regeneration mode, then in cooling mode and finally in standby mode.

16. The process according to any one of the preceding claims, wherein the temperature adjusted, spent flush gas stream is passed through the adsorbent in a counter current flow relative to the temperature adjusted, moist flush gas stream.

17. A high-temperature solid oxide electrolysis system suitable for converting a fuel stream into a product stream, the system comprising:
∘ a solid oxide electrolysis cell unit (8) comprising at least one solid oxide electrolysis cell comprising:
∘ a fuel side (9)
∘ an oxy side (10)
∘ a flush gas inlet (11)
∘ a flush gas outlet (12)
∘ a fuel gas inlet (13)
∘ a product gas outlet (14), and
∘ a drying unit (1) comprising
∘ an adsorbent bed (2)
∘ a drying unit inlet (3)
∘ a drying unit outlet (4)
∘ a regeneration gas inlet (5)
∘ a regeneration gas outlet (6);
∘
- wherein the adsorbent bed (2) is arranged within the drying unit (1); and
- wherein the drying unit (1) is arranged to convey a moist flush gas stream from the drying unit inlet (3) through the adsorbent bed (2) to the drying unit outlet (4) and wherein the drying unit (1) is arranged to convey a spent flush gas stream from the regeneration gas inlet (5) through the adsorbent bed (2) to the regeneration gas outlet (6); and
- wherein the drying unit outlet (4) is in fluid communication with the flush gas inlet (11) of the solid oxide electrolysis cell unit (8); and
- wherein the solid oxide electrolysis cell unit (8) is arranged to convey dried flush gas from the flush gas inlet (11), through the oxy side of the at least one solid oxide electrolysis cell, and to the flush gas outlet (12) of the solid oxide electrolysis cell unit (8); and
- wherein the flush gas outlet (12) is in fluid communication with the regeneration gas inlet (5) of the drying unit (1);

18. The system according to claim 17, wherein the system further comprises a control module for controlling the flow of temperature adjusted, moist flush gas stream to the drying unit, the dried flush gas stream from the drying unit, the temperature adjusted, dried flush gas stream from the drying unit, the temperature adjusted, spent flush gas stream to the drying unit and the spent regeneration gas from the drying unit.

19. The system according to any one of claims 17 or 18, wherein the drying unit outlet (4) in addition to being in fluid communication with the flush gas inlet (11) of the solid oxide electrolysis cell unit (8), is also in direct fluid communication with the regeneration gas inlet (5) of the drying unit (1).

20. The system according to any one of claims 17 to 19, wherein the solid oxide electrolysis cell unit (8) is arranged to convey a fuel gas from the fuel gas inlet (13), through the fuel side of the at least one solid oxide electrolysis cell, and to a product gas outlet (14) of the solid oxide electrolysis cell unit (8).

21. The system according to any one of claims 17 to 20, wherein a flush gas vent (16) is arranged downstream of the flush gas outlet (12) of the solid oxide electrolysis cell unit (8) and upstream of the regeneration gas inlet (5) of the drying unit (1).

22. The system according to any one of claims 17 to 21, wherein a compressor (21) is arranged downstream of the flush gas outlet (12) of the solid oxide electrolysis cell unit (8) and upstream of the regeneration gas inlet (5) of the drying unit (1).

23. The system according to any one of claims 17 to 22, wherein a temperature adjustment element in the form of a cooler and/or a heater is arranged downstream of the flush gas outlet of the solid oxide electrolysis cell unit and upstream of the regeneration gas inlet of the drying unit.

24. The system according to any one of claims 17 to 23, wherein a temperature adjustment element in the form of a cooler and/or a heater is arranged upstream of the drying unit inlet.

25. The system according to any one of claims 17 to 24, wherein a cooler is arranged upstream of the drying unit inlet and a water separator is arranged downstream of the cooler and upstream of the drying unit inlet.

26. The system according to any one of claims 23 to 25, wherein at least one of the coolers and/or heaters is a heat exchanger.

27. The system according to claim 26, wherein the cooler and/or heater is a heat exchanger and is arranged to exchange heat between the moist flush gas stream and the dried flush gas stream.

28. The system according to claims 26 or 27, wherein the cooler and/or heater is a heat exchanger and is arranged to exchange heat between the spent regeneration gas stream and the spent flush gas stream.

29. The system according to any one of claims 17 to 28, wherein the drying unit comprises multiple adsorbent beds arranged within the drying unit and the multiple adsorbent beds are arranged to convey a gas stream from the drying unit inlet through any of the multiple adsorbent beds to the drying unit outlet and to convey a gas stream from the regeneration gas inlet through the adsorbent bed to the regeneration gas outlet.

30. The system according to claim 29, further comprising a control module for controlling operation of each of the multiple beds in adsorption mode, regeneration mode, cooling mode and standby mode.

31. The system according to any one of claims 17 to 30, wherein the adsorbent is selected from the group consisting of silica gel, activated alumina, and zeolites; or mixtures thereof.

## Patentansprüche

1. Verfahren zum Betreiben eines Hochtemperatur-Festoxid-Elektrolysesystems, die Schritte umfassend zum:
- Bereitstellen einer Festoxid-Elektrolysezelleneinheit, die mindestens eine Festoxid-Elektrolysezelle umfasst, die eine Brennstoffseite und eine Sauerstoffseite aufweist;
- Bereitstellen eines feuchten Spülgasstroms;
- Bereitstellen eines Adsorptionsmittels, das einen Feuchtigkeitsadsorptionstemperaturbereich zur Adsorption von Feuchtigkeit und einen Feuchtigkeitsdesorptionstemperaturbereich zur Desorption von Feuchtigkeit aufweist;
- Anpassen der Temperatur des feuchten Spülgasstroms auf eine Temperatur innerhalb des Feuchtigkeitsadsorptionstemperaturbereichs, um einen temperaturangepassten feuchten Spülgasstrom zu erzeugen;
- Betreiben mindestens eines Abschnitts des Adsorptionsmittels in einem Adsorptionsmodus durch Durchleiten des temperaturangepassten feuchten Spülgasstroms durch mindestens den Abschnitt des Adsorptionsmittels, um einen getrockneten Spülgasstrom zu erzeugen;
- Durchleiten des getrockneten Spülgasstroms durch die Sauerstoffseite des SOEC, um einen verbrauchten Spülgasstrom zu erzeugen; und danach
- Anpassen der Temperatur mindestens eines Teils des verbrauchten Spülgasstroms auf eine Temperatur innerhalb des Desorptionstemperaturbereichs, um einen temperaturangepassten verbrauchten Spülgasstrom zu erzeugen;
- Betreiben mindestens eines Abschnitts des Adsorptionsmittels im Desorptionsmodus durch Durchleiten mindestens eines Teils des temperaturangepassten, verbrauchten Spülgasstroms durch mindestens den Abschnitt des Adsorptionsmittels, um im Adsorptionsmittel gebundene Feuchtigkeit zu desorbieren, um ein regeneriertes Adsorptionsmittel und ein verbrauchtes Regenerationsgas zu erhalten.

2. Verfahren nach Anspruch 1, wobei der verbrauchte Spülgasstrom vor Anpassen der Temperatur auf eine Temperatur im Feuchtigkeitsdesorptionstemperaturbereich unter Druck gesetzt wird.

3. Verfahren nach einem der Ansprüche 1 oder 2, wobei der feuchte Spülgasstrom als unter Druck stehender Strom bereitgestellt wird.

4. Verfahren nach einem der Ansprüche 1 bis 3, wobei vor Durchleiten des feuchten Spülgasstroms durch den mindestens einen Abschnitt des Adsorptionsmittels ein Teil der Feuchtigkeit durch Abkühlen des feuchten Spülgasstroms und Entfernen von Kondenswasser aus dem Strom entfernt wird.

5. Verfahren nach einem der vorstehenden Ansprüche, wobei der feuchte Spülgasstrom durch Wärmetausch zwischen dem kälteren, getrockneten Spülgasstrom und dem wärmeren, feuchten Spülgasstrom gekühlt wird.

6. Verfahren nach einem der vorstehenden Ansprüche, wobei der getrocknete Spülgasstrom vor Durchleiten durch die Sauerstoffseite der mindestens einen Festoxid-Elektrolysezelle erhitzt wird.

7. Verfahren nach einem der vorstehenden Ansprüche, wobei ein Brennstoffgasstrom, ausgewählt aus einem von Wasser, Wasserstoff, Kohlenmonoxid, Kohlendioxid und Gemischen daraus, durch die Brennstoffseite der mindestens einen Festoxid-Elektrolysezelle durchgeleitet wird, während an der mindestens einen Festoxid-Elektrolysezelle ein elektrisches Feld angelegt wird.

8. Verfahren nach einem der vorstehenden Ansprüche, wobei das Verfahren einen nachfolgenden Schritt zum Betreiben mindestens eines Abschnitts des Adsorptionsmittels in einem Kühlmodus umfasst, wobei der Schritt Kühlen mindestens des Abschnitts des Adsorptionsmittels von einer Temperatur innerhalb des Feuchtigkeitsdesorptionstemperaturbereichs auf eine Temperatur innerhalb des Feuchtigkeitsadsorptionstemperaturbereichs umfasst.

9. Verfahren nach Anspruch 8, wobei das Kühlen durch Durchleiten mindestens eines Teils des verbrauchten Spülgasstroms durch mindestens einen Abschnitt des Adsorptionsmittels und allmählich Senken der Temperatur des verbrauchten Spülgasstroms von einer Temperatur innerhalb des Feuchtigkeitsdesorptionstemperaturbereichs auf eine Temperatur innerhalb des Feuchtigkeitsadsorptionstemperaturbereichs erhalten wird, um ein regeneriertes, gekühltes Adsorptionsmittel zu erhalten.

10. Verfahren nach Anspruch 8, wobei das Kühlen durch Durchleiten mindestens eines Teils des getrockneten Spülgasstroms durch mindestens einen Abschnitt des Adsorptionsmittels vor Durchleiten des getrockneten Spülgasstroms durch die Sauerstoffseite des SOEC und allmählich Senken der Temperatur des mindestens einen Teils des verbrauchten Spülgasstroms von einer Temperatur innerhalb des Feuchtigkeitsdesorptionstemperaturbereichs auf eine Temperatur innerhalb des Feuchtigkeitsadsorptionstemperaturbereichs erhalten wird, um ein regeneriertes, gekühltes Adsorptionsmittel zu erhalten.

11. Verfahren nach Anspruch 1, wobei das Adsorptionsmittel mindestens einen ersten, einen zweiten und einen dritten Abschnitt umfasst und wobei der temperaturangepasste, feuchte Spülgasstrom zunächst durch den ersten Abschnitt des im Adsorptionsmodus arbeitenden Adsorptionsmittels durchgeleitet wird, um einen getrockneten Spülgasstrom bereitzustellen; danach Durchleiten des getrockneten Spülgasstroms durch den zweiten Abschnitt des im Kühlmodus arbeitenden Adsorptionsmittels und danach durch die Sauerstoffseite des SOEC, um einen verbrauchten Spülgasstrom zu erzeugen; und danach Durchleiten des verbrauchten Spülgasstroms durch den dritten Abschnitt des im Desorptionsmodus arbeitenden Adsorptionsmittels, um ein verbrauchtes Regenerationsgas zu erzeugen, wobei das Spülgas kontinuierlich durch alle drei Gefäße durchgeleitet wird.

12. Verfahren nach einem der vorstehenden Ansprüche, wobei das Adsorptionsmittel aus der Gruppe bestehend aus Kieselgel, aktiviertem Aluminiumoxid und Zeolithen; oder Gemischen daraus ausgewählt ist.

13. Verfahren nach einem der vorstehenden Ansprüche, wobei das Adsorptionsmittel zwei oder mehr Abschnitte umfasst und jeder Abschnitt unabhängig von den anderen Abschnitten betrieben wird.

14. Verfahren nach Anspruch 13, wobei jeder Abschnitt zeitweilig im Adsorptionsmodus, im Regenerationsmodus, im Kühlmodus und im Standby-Modus betrieben wird.

15. Verfahren nach einem der Ansprüche 13 oder 14, wobei jeder Abschnitt zuerst im Adsorptionsmodus, danach im Regenerationsmodus, danach im Kühlmodus und schließlich im Standby-Modus betrieben wird.

16. Verfahren nach einem der vorstehenden Ansprüche, wobei der temperaturangepasste, verbrauchte Spülgasstrom im Gegenstromfluss in Bezug zum temperaturangepassten, feuchten Spülgasstrom durch das Adsorptionsmittel geleitet wird.

17. Hochtemperatur-Festoxid-Elektrolysesystem, das zum Umwandeln eines Brennstoffstroms in einen Produktstrom geeignet ist, wobei das System umfasst:
- eine Festoxid-Elektrolysezelleneinheit (8), die mindestens eine Festoxid-Elektrolysezelle umfasst, umfassend:
- eine Kraftstoffseite (9)
- eine Sauerstoffseite (10)
- einen Spülgaseinlass (11)
- einen Spülgasauslass (12)
- einen Brennstoffgaseinlass (13)
- einen Produktgasauslass (14) und
- eine Trocknungseinheit (1), umfassend
- ein Adsorptionsmittelbett (2)
- einen Trocknungseinheitseinlass (3)
- einen Trocknungseinheitsauslass (4)
- einen Regenerationsgaseinlass (5)
- einen Regenerationsgasauslass (6);
- wobei das Adsorptionsmittelbett (2) innerhalb der Trocknungseinheit (1) angeordnet ist; und
- wobei die Trocknungseinheit (1) angeordnet ist, um einen feuchten Spülgasstrom vom Trocknungseinheitseinlass (3) durch das Adsorptionsmittelbett (2) hindurch zum Trocknungseinheitsauslass (4) zu fördern, und wobei die Trocknungseinheit (1) angeordnet ist, um einen verbrauchten Spülgasstrom vom Regenerationsgaseinlass (5) durch das Adsorptionsmittelbett (2) hindurch zum Regenerationsgasauslass (6) zu fördern; und
- wobei der Trocknungseinheitsauslass (4) in strömungstechnischer Kommunikation mit dem Spülgaseinlass (11) der Festoxid-Elektrolysezelleneinheit (8) steht; und
- wobei die Festoxid-Elektrolysezelleneinheit (8) angeordnet ist, um getrocknetes Spülgas vom Spülgaseinlass (11) durch die Sauerstoffseite der mindestens einen Festoxid-Elektrolysezelle und zum Spülgasauslass (12) der Festoxid-Elektrolysezelleneinheit (8) zu fördern; und
- wobei der Spülgasauslass (12) in strömungstechnischer Kommunikation mit dem Regenerationsgaseinlass (5) der Trocknungseinheit (1) steht.

18. System nach Anspruch 17, wobei das System weiter ein Steuermodul zum Steuern des Flusses von temperaturangepasstem, feuchtem Spülgasstrom zur Trocknungseinheit, dem getrockneten Spülgasstrom aus der Trocknungseinheit, dem temperierten, getrockneten Spülgasstrom aus der Trocknungseinheit, dem temperierten, verbrauchten Spülgasstrom zur Trocknungseinheit und dem verbrauchten Regenerationsgas aus der Trocknungseinheit umfasst.

19. System nach einem der Ansprüche 17 oder 18, wobei der Trocknungseinheitsauslass (4) zusätzlich dazu, mit dem Spülgaseinlass (11) der Festoxid-Elektrolysezelleneinheit (8) in strömungstechnischer Kommunikation zu stehen, auch mit dem Regenerationsgaseinlass (5) der Trocknungseinheit (1) in direkter strömungstechnischer Kommunikation steht.

20. System nach einem der Ansprüche 17 bis 19, wobei die Festoxid-Elektrolysezelleneinheit (8) angeordnet ist, um ein Brennstoffgas vom Brennstoffgaseinlass (13) durch die Brennstoffseite der mindestens einen Festoxid-Elektrolysezelle und zu einem Produktgasauslass (14) der Festoxid-Elektrolysezelleneinheit (8) zu fördern.

21. System nach einem der Ansprüche 17 bis 20, wobei eine Spülgasentlüftung (16) stromabwärts des Spülgasauslasses (12) der Festoxid-Elektrolysezelleneinheit (8) und stromaufwärts des Regenerationsgaseinlasses (5) der Trocknungseinheit (1) angeordnet ist.

22. System nach einem der Ansprüche 17 bis 21, wobei ein Kompressor (21) stromabwärts des Spülgasauslasses (12) der Festoxid-Elektrolysezelleneinheit (8) und stromaufwärts des Regenerationsgaseinlasses (5) der Trocknungseinheit (1) angeordnet ist.

23. System nach einem der Ansprüche 17 bis 22, wobei ein Temperaturanpassungselement in der Form eines Kühlers und/oder Heizers stromabwärts des Spülgasauslasses der Festoxid-Elektrolysezelleneinheit und stromaufwärts des Regenerationsgaseinlasses der Trocknungseinheit angeordnet ist.

24. System nach einem der Ansprüche 17 bis 23, wobei ein Temperaturanpassungselement in der Form eines Kühlers und/oder Heizers stromaufwärts des Trocknungseinheitseinlasses angeordnet ist.

25. System nach einem der Ansprüche 17 bis 24, wobei ein Kühler stromaufwärts des Trocknungseinheitseinlasses und ein Wasserabscheider stromabwärts des Kühlers und stromaufwärts des Trocknungseinheitseinlasses angeordnet ist.

26. System nach einem der Ansprüche 23 bis 25, wobei mindestens einer von den Kühlern und/oder den Heizern ein Wärmetauscher ist.

27. System nach Anspruch 26, wobei der Kühler und/oder der Heizer ein Wärmetauscher ist und angeordnet ist, um Wärme zwischen dem feuchten Spülgasstrom und dem getrockneten Spülgasstrom auszutauschen.

28. System nach den Ansprüchen 26 oder 27, wobei der Kühler und/oder der Heizer ein Wärmetauscher ist und angeordnet ist, um Wärme zwischen dem verbrauchten Regenerationsgasstrom und dem verbrauchten Spülgasstrom auszutauschen.

29. System nach einem der Ansprüche 17 bis 28, wobei die Trocknungseinheit mehrere innerhalb der Trocknungseinheit angeordnete Adsorptionsmittelbetten umfasst und die mehreren Adsorptionsmittelbetten angeordnet sind, um einen Gasstrom vom Trocknungseinheitseinlass durch eines der mehreren Adsorptionsmittelbetten zum Trocknungseinheitsauslass zu fördern und um einen Gasstrom vom Regenerationsgaseinlass durch das Adsorptionsmittelbett zum Regenerationsgasauslass zu fördern.

30. System nach Anspruch 29, das weiter ein Steuermodul zum Steuern des Betriebs jedes der mehreren Betten im Adsorptionsmodus, Regenerationsmodus, Kühlmodus und Standby-Modus umfasst.

31. System nach einem der Ansprüche 17 bis 30, wobei das Adsorptionsmittel aus der Gruppe bestehend aus Kieselgel, aktiviertem Aluminiumoxid und Zeolithen; oder Gemischen daraus ausgewählt ist.

## Revendications

1. **Processus** d'activation d'un système d'électrolyse à oxyde solide à haute température comprenant les étapes de :
- fourniture d'une unité de cellule d'électrolyse à oxyde solide comprenant au moins une cellule d'électrolyse à oxyde solide présentant un côté combustible et un côté oxy ;
- fourniture d'un flux de gaz de rinçage humide ;
- fourniture d'un adsorbant présentant une plage de températures d'adsorption d'humidité pour adsorber l'humidité et une plage de températures de désorption d'humidité pour désorber l'humidité ;
- réglage de la température du flux de gaz de rinçage humide à une température située dans la plage de températures d'adsorption d'humidité pour produire un flux de gaz de rinçage humide à température réglée ;
- activation d'au moins une section de l'adsorbant en mode adsorption en faisant passer le flux de gaz de rinçage humide à température réglée à travers au moins la section de l'adsorbant pour fournir un flux de gaz de rinçage sec ;
- passage du flux de gaz de rinçage sec du côté oxy du SOEC pour produire un flux de gaz de rinçage usé ; puis
- réglage de la température d'au moins une partie du flux de gaz de rinçage usé à une température située dans la plage de températures de désorption d'humidité pour produire un flux de gaz de rinçage usé à température réglée ;
- fonctionnement d'au moins une section de l'adsorbant en mode de désorption en faisant passer au moins une partie du flux de gaz de rinçage usé à température réglée à travers au moins la section de l'adsorbant pour désorber l'humidité liée dans l'adsorbant afin d'obtenir un adsorbant régénéré et un gaz de régénération usé.

2. Processus selon la revendication 1, dans lequel le flux de gaz de rinçage usé est pressurisé avant le réglage de la température à une température située dans la plage de températures de désorption d'humidité.

3. Processus selon l'une quelconque des revendications 1 ou 2, dans lequel le flux de gaz de rinçage humide est fourni sous forme de flux pressurisé.

4. Processus selon l'une quelconque des revendications 1 à 3, dans lequel, avant de faire passer le flux de gaz de rinçage humide à travers au moins une section de l'adsorbant, une partie de l'humidité est éliminée en refroidissant le flux de gaz de rinçage humide et en éliminant l'eau condensée du flux.

5. Processus selon l'une quelconque des revendications précédentes, dans lequel le flux de gaz de rinçage humide est refroidi par échange de chaleur entre le flux de gaz de rinçage sec plus froid et le flux de gaz de rinçage humide plus chaud.

6. Processus selon l'une quelconque des revendications précédentes, dans lequel le flux de gaz de rinçage sec est chauffé avant de le faire passer du côté oxy la au moins une cellule d'électrolyse à oxyde solide.

7. Processus selon l'une quelconque des revendications précédentes, dans lequel un flux de gaz combustible choisi parmi l'un des éléments parmi l'eau, l'hydrogène, le monoxyde de carbone, le dioxyde de carbone et des mélanges de ceux-ci est passé du côté combustible de la au moins une cellule d'électrolyse à oxyde solide, en même temps qu'un champ électrique est exercé sur la au moins une cellule d'électrolyse à oxyde solide.

8. Processus selon l'une quelconque des revendications précédentes, dans lequel le processus comprend une étape ultérieure d'activation d'au moins une section de l'adsorbant en mode de refroidissement, l'étape comprenant le refroidissement d'au moins la section de l'adsorbant d'une température située dans la plage de températures de désorption d'humidité à une température située dans la plage de températures d'adsorption d'humidité.

9. Processus selon la revendication 8, dans lequel le refroidissement est obtenu en faisant passer au moins une partie du flux de gaz de rinçage usé à travers au moins une section de l'adsorbant et en abaissant progressivement la température du flux de gaz de rinçage usé d'une température située dans la plage de températures de désorption d'humidité à une température située dans la plage de températures d'adsorption d'humidité afin d'obtenir un adsorbant régénéré et refroidi.

10. Processus selon la revendication 8, dans lequel le refroidissement est obtenu en faisant passer au moins une partie du flux de gaz de rinçage sec à travers au moins une section de l'adsorbant avant de faire passer le flux de gaz de rinçage sec du côté oxy du SOEC, et en abaissant progressivement la température de la au moins une partie du flux de gaz de rinçage usé d'une température située dans la plage de températures de désorption d'humidité à une température située dans la plage de températures d'adsorption d'humidité afin d'obtenir un adsorbant régénéré et refroidi.

11. Processus selon la revendication 1, dans lequel l'adsorbant comprend au moins une première, une deuxième et une troisième section, et dans lequel le flux de gaz de rinçage humide à température réglée est d'abord passé à travers la première section de l'adsorbant fonctionnant en mode d'adsorption pour fournir un flux de gaz de rinçage sec ; puis, le flux de gaz de rinçage sec est passé à travers la deuxième section de l'adsorbant fonctionnant en mode de refroidissement, puis le flux de rinçage sec est passé à travers du côté oxy de la SOEC pour produire un flux de gaz de rinçage usé ; et enfin, le flux de gaz de rinçage usé est passé à travers la troisième section de l'adsorbant fonctionnant en mode de désorption pour produire un gaz de régénération usé, dans lequel le gaz de rinçage passe en continu à travers les trois récipients.

12. Processus selon l'une quelconque des revendications précédentes, dans lequel l'adsorbant est choisi dans le groupe consistant en gel de silice, alumine activée et zéolites ; ou de mélanges de ceux-ci.

13. Processus selon l'une quelconque des revendications précédentes, dans lequel l'adsorbant comprend deux sections, ou plus, et chaque section est activée indépendamment des autres sections.

14. Processus selon la revendication 13, dans lequel chaque section est activée par intermittence en mode adsorption, en mode régénération, en mode refroidissement et en mode veille.

15. Processus selon l'une quelconque des revendications 13 ou 14, dans lequel chaque section est d'abord activée en mode adsorption, puis en mode régénération, puis en mode refroidissement et enfin en mode veille.

16. Processus selon l'une quelconque des revendications précédentes, dans lequel le flux de gaz de rinçage usé à température réglée est passé à travers l'adsorbant dans un flux à contre-courant par rapport au flux de gaz de rinçage humide à température réglée.

17. Système d'électrolyse à oxyde solide à haute température adapté à la conversion d'un flux de combustible en un flux de produit, le système comprenant :
- une unité de cellule d'électrolyse à oxyde solide (8) comprenant au moins une cellule d'électrolyse à oxyde solide comprenant :
- un côté combustible (9)
- un côté oxy (10)
- une entrée de gaz de rinçage (11)
- une sortie de gaz de rinçage (12)
- une entrée de gaz combustible (13)
- une sortie de gaz produit (14), et
- une unité de séchage (1) comprenant
- un lit adsorbant (2)
- une entrée d'unité de séchage (3)
- une sortie d'unité de séchage (4)
- une entrée de gaz de régénération (5)
- une sortie de gaz de régénération (6) ;
- dans lequel le lit adsorbant (2) est agencé à l'intérieur de l'unité de séchage (1) ; et
- dans lequel l'unité de séchage (1) est agencée pour acheminer un flux de gaz de rinçage humide de l'entrée d'unité de séchage (3), à travers le lit d'adsorbant (2), à la sortie d'unité de séchage (4) et dans lequel l'unité de séchage (1) est agencée pour acheminer un flux de gaz de rinçage usé de l'entrée de gaz de régénération (5), à travers le lit d'adsorbant (2), à la sortie de gaz de régénération (6) ; et
- dans lequel la sortie d'unité de séchage (4) est en communication fluidique avec l'entrée de gaz de rinçage (11) de l'unité de cellule d'électrolyse à oxyde solide (8) ; et
- dans lequel l'unité de cellule d'électrolyse à oxyde solide (8) est agencée pour acheminer le gaz de rinçage sec de l'entrée de gaz de rinçage (11), à travers le côté oxy de la au moins une cellule d'électrolyse à oxyde solide, et à la sortie de gaz de rinçage (12) de l'unité de cellule d'électrolyse à oxyde solide (8) ; et
- dans lequel la sortie de gaz de rinçage (12) est en communication fluidique avec l'entrée de gaz de régénération (5) de l'unité de séchage (1).

18. Système selon la revendication 17, dans lequel le système comprend en outre un module de commande pour commander le débit de flux de gaz de rinçage humide à température réglée vers l'unité de séchage, le flux de gaz de rinçage sec provenant de l'unité de séchage, le flux de gaz de rinçage sec à température réglée provenant de l'unité de séchage, le flux de gaz de rinçage usé à température réglée vers l'unité de séchage et le gaz de régénération usé provenant de l'unité de séchage.

19. Système selon l'une quelconque des revendications 17 ou 18, dans lequel la sortie d'unité de séchage (4) en plus d'être en communication fluidique avec l'entrée de gaz de rinçage (11) de l'unité de cellule d'électrolyse à oxyde solide (8), est également en communication fluidique directe avec l'entrée de gaz de régénération (5) de l'unité de séchage (1).

20. Système selon l'une quelconque des revendications 17 à 19, dans lequel l'unité de cellule d'électrolyse à oxyde solide (8) est agencée pour acheminer un gaz combustible de l'entrée de gaz combustible (13), à travers le côté combustible de la au moins une cellule d'électrolyse à oxyde solide, et à une sortie de gaz produit (14) de l'unité de cellule d'électrolyse à oxyde solide (8).

21. Système selon l'une quelconque des revendications 17 à 20, dans lequel un évent de gaz de rinçage (16) est agencé en aval de la sortie de gaz de rinçage (12) de l'unité de cellule d'électrolyse à oxyde solide (8) et en amont de l'entrée de gaz de régénération (5) de l'unité de séchage (1).

22. Système selon l'une quelconque des revendications 17 à 21, dans lequel un compresseur (21) est agencé en aval de la sortie de gaz de rinçage (12) de l'unité de cellule d'électrolyse à oxyde solide (8) et en amont de l'entrée de gaz de régénération (5) de l'unité de séchage (1).

23. Système selon l'une quelconque des revendications 17 à 22, dans lequel un élément de réglage de la température sous la forme d'un dispositif de refroidissement et/ou d'un dispositif de chauffage est agencé en aval de la sortie de gaz de rinçage de l'unité de cellule d'électrolyse à oxyde solide et en amont de l'entrée de gaz de régénération de l'unité de séchage.

24. Système selon l'une quelconque des revendications 17 à 23, dans lequel un élément de réglage de la température sous la forme d'un dispositif de refroidissement et/ou d'un dispositif de chauffage est agencé en amont de l'entrée d'unité de séchage.

25. Système selon l'une quelconque des revendications 17 à 24, dans lequel un dispositif de refroidissement est agencé en amont de l'entrée d'unité de séchage et un séparateur d'eau est agencé en aval du dispositif de refroidissement et en amont de l'entrée d'unité de séchage.

26. Système selon l'une quelconque des revendications 23 à 25, dans lequel au moins l'un parmi les dispositifs de refroidissement et/ou dispositifs de chauffage est un échangeur de chaleur.

27. Système selon la revendication 26, dans lequel le dispositif de refroidissement et/ou le dispositif de chauffage est un échangeur de chaleur et est agencé pour échanger de la chaleur entre le flux de gaz de rinçage humide et le flux de gaz de rinçage sec.

28. Système selon les revendications 26 ou 27, dans lequel le dispositif de refroidissement et/ou le dispositif de chauffage est un échangeur de chaleur et est agencé pour échanger de la chaleur entre le flux de gaz de régénération usé et le flux de gaz de rinçage usé.

29. Système selon l'une quelconque des revendications 17 à 28, dans lequel l'unité de séchage comprend plusieurs lits adsorbants agencés à l'intérieur de l'unité de séchage et les multiples lits adsorbants sont agencés pour acheminer un flux de gaz de l'entrée d'unité de séchage, à travers l'un quelconque des multiples lits adsorbants, à la sortie d'unité de séchage et pour acheminer un flux de gaz de l'entrée de gaz de régénération, à travers le lit adsorbant, à la sortie de gaz de régénération.

30. Système selon la revendication 29, comprenant en outre un module de commande pour commander le fonctionnement de chacun des multiples lits en mode d'adsorption, en mode régénération, en mode refroidissement et en mode veille.

31. Système selon l'une quelconque des revendications 17 à 30, dans lequel l'adsorbant est choisi dans le groupe consistant en gel de silice, alumine activée et zéolites ; ou de mélanges de ceux-ci.
